# EUROPEAN PATENT APPLICATION

(11) **EP 4 527 189 A1**
(43) Date of publication of application: **26.03.2025**
(21) Application number: 23198895.7
(22) Date of filing: 21.09.2023
(51) Int. Cl.: A01G 25/00, E04D 13/08

(54) **AN IRRIGATION SYSTEM**

(71) Applicant: Husqvarna AB, 561 82 Huskvarna (SE)
(72) Inventor: Kistler, Michael, 89185 Hüttisheim (DE); Junginger, Samuel, 89547 Gerstetten (DE)
(74) Representative: Finkele, Rolf

(57) **Abstract**

An irrigation system **(100)** includes a rainwater collection system **(200).** The rainwater collection system **(200)** includes a downpipe **(210),** and a water reservoir **(230)** fluidly coupled to the downpipe **(210)** for receiving rainwater therefrom. The irrigation system **(100)** further includes a rainwater distribution system **(300).** The rainwater distribution system **(300)** includes a pump **(310)** having an inlet **(312)** and an outlet **(314)** to supply water received from the water reservoir **(230).** The rainwater distribution system **(300)** further includes a power line **(320)** extending from a power source to deliver power to the pump **(310),** and a pressure hose **(316)** fluidly coupled to the pump **(310)** for supplying the pumped water. The irrigation system **(100)** is characterized in that either the pressure hose **(316)** extending from the outlet **(314)** of the pump **(310)** or a suction hose **(318)** extending through the inlet **(312)** of the pump **(310)** at least partially runs inside the downpipe **(210)** and extends into the water reservoir **(230).**

## Description

### TECHNICAL FIELD

The present disclosure relates to an irrigation system, particularly rainwater irrigation system that may collect and supply rainwater for irrigation purposes.

### BACKGROUND

An irrigation system, particularly rainwater irrigation system, may collect rainwater in a water reservoir and supply collected water for irrigating lawns, gardens, and the like. The water reservoir may be an underground water reservoir and may include a cover removably mounted at the top of the water reservoir. The rainwater may be directed via a downpipe and additional ground-based pipe extensions into the water reservoir. The collected water may be accessed from the water reservoir by many traditionally known methods.

In one known method, the cover of the water reservoir may be removed, and a pump may be placed into the water reservoir in a manner such that a power line for powering the pump and a pressure hose for supplying pumped water may extend out of the water reservoir. Electric power from an external source may be supplied to the pump via the power line, and the collected water in the water reservoir may be pumped for supply to a consumer via the pressure hose that may optionally additionally be fluidly coupled to a water tap, a distribution hose, a sprinkler, and the like.

In another known method, the pump may be placed in an outer vicinity of the water reservoir and a suction hose fluidly coupled at an inlet of the pump may be extended into the water reservoir after removing the cover mounted on the water reservoir such that when the electric power is supplied to the pump, the suction hose may suck water collected in the water reservoir and the pressure hose fluidly coupled at an outlet of the pump may supply pumped water to the consumer for further applications.

In yet another known method, the collected water may be accessed from the underground water reservoir without lifting the cover mounted on the water reservoir. The water reservoir may have a secondary access point under the ground that may end with a ground buried water socket via which an externally placed pump may access the water inside the water reservoir. In other words, the suction hose of the pump may be fluidly coupled with the ground buried water socket to suck the water out of the water reservoir and the pressure hose of the pump may then supply pumped water received for external applications by the consumer.

However, the known methods may be cumbersome, unergonomic, timeconsuming, and less efficient. The accessories, such as the power cable/ lines, hoses, and the like may be required to be carried and laid over the ground, or additional piping systems may be required to be installed underground to establish connection between secondary access point of the water reservoir and the ground buried water socket.

An example of an improved irrigation system is provided in Chinese Application CN 113,016,573 A (hereinafter referred to as '573 reference). The '573 reference provides a hollow cylinder having an upper end and a lower end. The upper end of the hollow cylinder is provided with a water inlet and the lower end of the hollow cylinder is provided with a water storage portion. The water storage portion connects the water inlet through a pipe. The hollow cylinder further includes a pump, a suction hose of the pump, and hoses towards the nozzles.

### SUMMARY OF THE INVENTION

In view of the above, it is an objective of the present invention to solve or at least reduce the drawbacks discussed above. The objective is at least partially achieved by an irrigation system.

According to an aspect of the present invention, the irrigation system includes a rainwater collection system. The rainwater collection system includes a downpipe, and a water reservoir fluidly coupled to the downpipe for receiving rainwater therefrom. The irrigation system further includes a rainwater distribution system. The rainwater distribution system includes a pump having an inlet and an outlet to supply water received from the water reservoir. The rainwater distribution system further includes a power line extending from a power source to deliver power to the pump, and a pressure hose fluidly coupled to the pump for supplying the pumped water. The irrigation system is characterized in that either the pressure hose extending from the outlet of the pump or a suction hose extending through the inlet of the pump at least partially runs inside the downpipe and extends into the water reservoir.

Thus, the present disclosure provides an improved irrigation system that may be easy to handle, ergonomic, efficient, and aesthetically pleasing. The downpipe extending from, for example, a resident building to the water reservoir may be used to direct the rainwater into the water reservoir. Additionally, the downpipe may be used in the form of an empty duct to at least partially house the pressure hose of the pump housed inside the water reservoir, or the downpipe may be used to at least partially house the suction hose of the pump housed outside the water reservoir. The downpipe may thus be advantageously used for dual purpose of providing rainwater passage, and the pressure hose or the suction hose passage, thereby allowing for simple and tidy visuals of the irrigation system. The downpipe may be formed from one or more pipes. Further, the irrigation system may be used without having to constantly remove a cover mounted on the water reservoir in order to make fluid and/ or electric couplings.

The inlet and the outlet according to the present invention may be defined as ports via which the pump may suck or receive water from the water reservoir and via which the pump may deliver pumped water to a consumer respectively.

The pressure hose according to the present invention may be defined as the hose via which the pump may deliver the pumped water to the consumer for further applications. The pressure hose may additionally be fluidly coupled to a water tap, a distribution hose, a sprinkler, a water sprayer, and the like. The distribution hose may be fluidly coupled to the pressure hose for distributing pumped water for various applications to be executed away from the location of the pump.

The suction hose according to the present invention may be defined as the hose via which the pump may receive water from the water reservoir for pumping operation.

According to an exemplary embodiment of the invention, the pump is an electric water pump. The electric water pump is a commonly used pump for water transport applications. The electric water pump may be operated by an electric power supply received via the power line carrying electric energy from the power source, such as a battery. However, any other type of pump may be used without departing from the spirit of the present invention.

According to an exemplary embodiment of the invention, the pump is a submersible pump. The submersible pump may have a safe, lightweight, leakproof, corrosion resistant, compact, and portable structure. The submersible pump may require less maintenance. Further, the submersible pump may be a singlestage pump.

According to an exemplary embodiment of the invention, the pump is housed inside the water reservoir such that the pressure hose extending from the outlet of the pump and the power line extending from the power source to deliver power to the pump at least partially runs inside the downpipe and extend into the water reservoir. The downpipe may at least partially house the power line and the pressure hose when the pump is housed inside the water reservoir such that the power line and the pressure hose may only be partially visible, or not at all visible to the consumer operating the irrigation system, thereby creating a sophisticated look and feel of the overall irrigation system. Further, this may substantially eliminate the occurrence of any inadvertent accidents such as, due to electric shocks, entangling of power lines to the foot of the consumer, and the like, which may otherwise be possible when the power lines may be left in an open environment surrounding the consumer of the irrigation system.

According to an exemplary embodiment of the invention, the pump is housed outside the water reservoir such that the suction hose extending through the inlet of the pump at least partially runs inside the downpipe and extends into the water reservoir. The advantageous application of using the downpipe as the housing duct for the suction hose in addition to using the downpipe merely as the means of providing a channel for allowing rainwater to flow to the water reservoir makes the irrigation system of the present invention to be aesthetically pleasing, and easy to handle and operate. This may also prevent inadvertent breakage, or tearing of the suction hose which may otherwise be possible if the suction hose is left in the open environment surrounding the consumer of the irrigation system.

According to an exemplary embodiment of the invention, the downpipe includes an opening. The opening may be formed by drilling, or any other commonly known method for carving the opening in a cylindrical object such as, the downpipe. Further, perimeter or circumference of the opening may be smoothened to prevent any breakage in the pressure hose, and/ or the suction hose, and/ or the power line that may at least partially run through the downpipe and extend into the water reservoir.

According to an exemplary embodiment of the invention, the pressure hose extending from the outlet of the pump or the suction hose extending through the inlet of the pump at least partially runs inside the downpipe and extend into the water reservoir through the opening. The opening may allow passage of the pressure hose, and/ or the suction hose into the downpipe. The opening may have any shape and size as per the requirement of the application, size of the pressure hose, and/ or the suction hose, amongst other operating factors.

According to an exemplary embodiment of the invention, the power line extending from the power source to deliver power to the pump at least partially runs inside the downpipe and extend into the water reservoir through the opening. The opening may allow passage of the power line into the downpipe. The opening may have any shape and size as per the requirement of the application, size of the power line, amongst other operating factors.

According to an exemplary embodiment of the invention, the opening is covered with a cover having guiding, and insertion passages for the power line, and/or the suction hose, and/or the pressure hose. The cover may have slots, or orifices which may guide the power line and/or the suction hose, and/or the pressure hose into the downpipe. The slots, or the orifices may be plugged closed when not required to prevent any leakage through the downpipe. The slots, or the orifices may further be pre-fixed with nipples, or other coupling means.

According to an exemplary embodiment of the invention, the downpipe includes a holder to guide and hold the pressure hose, and/ or the suction hose, and/ or the power line. The downpipe may include the holder proximate to the lower end of the downpipe for proper alignment and hold of the pressure hose, and/ or the suction hose, and/ or the power line inside of the downpipe for proper functioning of the irrigation system. The holder may prevent entanglement of the pressure hose, and/ or the suction hose, and/ or the power line inside of the downpipe.

According to a further aspect of the present invention, the irrigation system includes an insert. The insert is functionally disposed along the downpipe within an empty space along the downpipe. The empty space is created by removing a portion of the downpipe. The insert may have provision for allowing guiding, and insertion of the power line, and/or the suction hose, and/or the pressure hose into the downpipe. The insert may easily be retrofitted to an existing downpipe.

According to an exemplary embodiment of the invention, the insert includes an insert opening. The downpipe may have the insert that may include the opening referred to as the insert opening. The insert opening may allow the pressure hose, and/or the power line, and/or the suction hose to at least partially run inside the downpipe and extend into the water reservoir. Further, the insert opening may have any shape and size without departing from the spirit of the present invention.

According to an exemplary embodiment of the invention, the insert includes a shielding component. The shielding component is configured to at least partially cover the insert opening. The shielding component may prevent leakage of rainwater passing through the downpipe via the insert opening. The shielding component may be any structure designed around the insert opening to deviate the rainwater passing through the downpipe away from the insert opening. Further, the shielding component may channelize or guide the pressure hose, and/ or the suction hose, and/ or the power line into the insert, and hence the downpipe. However, in some embodiments, there may not be any shielding component provided with the insert, and the leakage may be prevented by any other known methods.

According to an exemplary embodiment of the invention, the shielding component may be integrated with the insert. The shielding component may be formed in one piece with the insert. However, the shielding component may be removably coupled to the insert using a set of fasteners.

According to an exemplary embodiment of the invention, the insert is removably coupled to an adapter. The structure of the adapter may be such that it may guide the rainwater passing through the downpipe away from the insert opening. The removable coupling between the insert and the adapter may be executed by any coupling means known in the related art.

According to an exemplary embodiment of the invention, the adapter includes a flange portion and an elbow portion. The flange portion is configured to allow removal coupling between the insert and the adapter, and the elbow portion is configured to fluidly couple with the pressure hose when the pump is housed inside the water reservoir. Further, the adapter is configured to at least partially cover the insert opening. The adapter may be configured to prevent leakage of rainwater passing through the downpipe via the insert opening. Further, the adapter may function as an interface between the downpipe and the pressure hose, and/ or the suction hose, and/ or the power line.

Before discussing the invention with the help of the drawings the invention will be briefly discussed in general. An irrigation system may be provided with a rainwater collection system including a downpipe, and a water reservoir fluidly coupled to the downpipe for receiving water from the downpipe. The irrigation system may further include a rainwater distribution system including a pump with a suction hose, and a pressure hose, and a power line, for receiving power, particularly electric power for operation of the pump. The suction hose, and/ or the pressure hose, and/ or the power line may at least partially run inside the downpipe and extend into the water reservoir as per the application requirements. The downpipe may include an opening to allow passage of the suction hose, and/ or the pressure hose, and/ or the power line into the downpipe down to the water reservoir.

The downpipe may further additionally include a retrofittable one-piece insert that may be installed between the downpipes. The insert may allow the passage of power lines, and/ or the pressure hose, and/ or suction hose from water reservoir to a water tapping point without having to constantly open a cover mounted on the water reservoir. The cover only needs to be opened once during the initial installation phase of the irrigation system. The insert may additionally include an adapter to accommodate the suction hose, and/ or the pressure hose, and/ or the power line. The adapter may have a seal and may be screwed to the insert. Further, the insert may include a bushing to indicate the level of the water collected in the water reservoir. Further, the suction hose, and/ or the pressure hose, and/ or the power line may be routed at the water reservoir side, so that they do not get entangled in the lower part of the downpipe.

The irrigation system according to the present invention may provide the dual-purpose downpipe. The irrigation system according to the present invention may allow usage of the irrigation system without having to constantly open the cover mounted on the water reservoir. The irrigation system according to the present invention may provide the retrofittable insert that may connect the pressure hose with a water tap, or a distribution hose, or a sprinkler, and the like.

According to an exemplary embodiment of the invention, the insert additionally includes the adapter such that a faucet, or the distribution hose may be screwed to the adapter to transfer the pumped water for further applications.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a schematic view of an irrigation system, in accordance with an exemplary embodiment of the present disclosure;
**FIG. 2** illustrates another schematic view of an irrigation system, in accordance with an exemplary embodiment of the present disclosure;
**FIG. 3** illustrates a schematic view of an irrigation system with a downpipe additionally having an insert, in accordance with an exemplary embodiment of the present disclosure;
**FIG. 4** illustrates another schematic view of an irrigation system with a downpipe additionally having an insert, in accordance with an exemplary embodiment of the present disclosure;
**FIG. 5A** illustrates a front schematic view of a downpipe with an insert, in accordance with an exemplary embodiment of the present disclosure;
**FIG. 5B** illustrates a side cross-sectional view of a downpipe with an insert, in accordance with an exemplary embodiment of the present disclosure;
**FIG. 6** illustrates an exploded schematic view of an insert with an adapter, in accordance with an exemplary embodiment of the present disclosure;
**FIG. 7** illustrates a schematic view of an insert fluidly couple with a faucet, in accordance with an exemplary embodiment of the present disclosure; and
**FIG. 8** illustrates a schematic view of an insert fluidly couple with a hose connector, in accordance with an exemplary embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

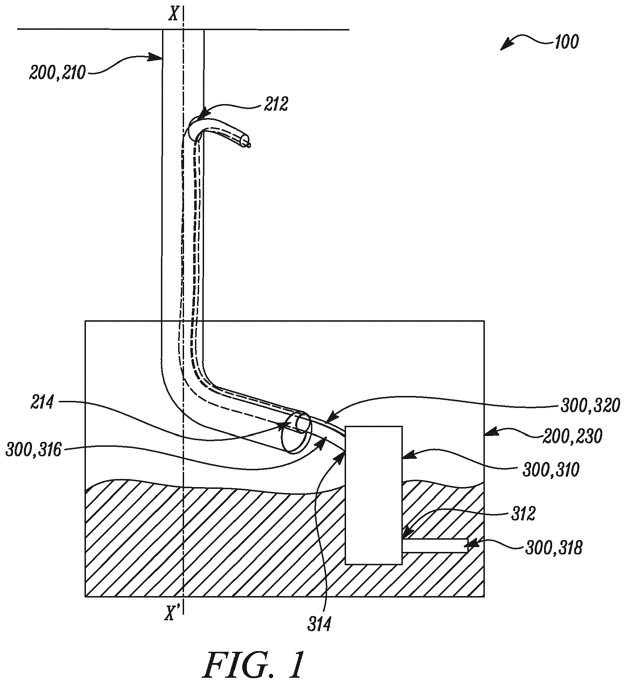

**FIG. 1** illustrates a schematic view of an irrigation system **100.** The irrigation system **100** includes a rainwater collection system **200.** The rainwater collection system **200** includes a downpipe **210,** and a water reservoir **230** fluidly coupled to the downpipe **210** for receiving rainwater from the downpipe **210.** The downpipe **210** has a cylindrical shape, or a circular cross-section. The downpipe **210** receives the rainwater for example, from a rooftop of a residential building (not shown). The downpipe **210** includes an opening **212** in a plane parallel to an axis **X-X'** of the downpipe **210.** The downpipe **210** at least partially extends inside the water reservoir **230** such that the rainwater flows from the downpipe **210** and gets collected in the water reservoir **230.** The term rainwater and the term water are interchangeably used in the disclosure of the present invention.

The irrigation system **100** further includes a rainwater distribution system **300.** The rainwater distribution system **300** includes a pump **310** having an inlet **312** and an outlet **314** to supply water received from the water reservoir **230.** The pump **310** is an electric water pump. Further, the electric water pump illustrated in **FIG. 1** is a submersible pump. The rainwater distribution system **300** further includes a pressure hose **316** fluidly coupled to the outlet **314** of the pump **310** for supplying the pumped water for further applications, such as irrigation. Further, the rainwater distribution system **300** includes a suction hose **318** fluidly coupled to the inlet **312** of the pump **310** to suck water collected in the water reservoir **230.** Furthermore, the rainwater distribution system **300** includes a power line **320** extending from a power source (not shown) to deliver power, particularly electric power to the pump **310.**

With continuous reference to **FIG. 1****,** for operation of the irrigation system **100,** the pump **310** is at least partially submerged in the water reservoir **230** such that at least the inlet **312** of the pump **310** is completely surrounded by the water collected in the water reservoir **230.** Further, the power line **320** to operate the pump **310** extends from the power source to the pump **310** via the downpipe **210.** Further, the pressure hose **316** fluidly coupled to the outlet **314** of the pump **310** extends from the pump **310** to the downpipe **210** and further extend at least partially outside the downpipe **210** for facilitating further applications of the collected water in the water reservoir **230.** In other words, the pump **310** is housed inside the water reservoir **230** such that the pressure hose **316** extending from the outlet **314** of the pump **310** and the power line **320** extending from the power source to deliver power to the pump **310** at least partially runs inside the downpipe **210** and extend into the water reservoir **230.**

Further, the pressure hose **316** extending from the outlet **314** of the pump **310** and the power line **320** extending from the power source to deliver power to the pump **310** at least partially runs inside the downpipe **210** and extend into the water reservoir **230** through the opening **212** of the downpipe **210.** The opening **212** as illustrated in **FIG. 1** is a circular opening. In another words, the opening **212** allows the pressure hose **316** extending from the pump **310** and passing through the downpipe **210** to at least partially extend past the downpipe **210.** Similarly, the opening **212** allows the power line **320** extending from the pump **310** to at least partially extend past the downpipe **210** in order to directly or indirectly electrically couple to the power source.

Further, in another embodiment, the opening **212** may be covered with a cover having guiding, and insertion passages for the power line **320,** and/ or the pressure hose **316.** The cover may have slots, or orifices which may guide the power line **320,** and/or the pressure hose **316** individually into the downpipe **210** in a sophisticated manner without any mutual entanglement.

Further, the downpipe **210** includes a holder **214** to guide and hold the pressure hose **316,** and/ or the power line **320.** The holder **214** illustrated in **FIG. 1** is located proximate to the lower end of the downpipe **210.** The lower end of the downpipe **210** is defined as the end of the downpipe **210** which is proximate to the pump **310** at least partially submerged under water collected in the water reservoir **230.** Further, the holder **214** of **FIG. 1** is configured to hold the pressure hose **316** as well as the power line **320** for proper alignment and hold of the pressure hose, and the power line **320** inside of the downpipe **210** for proper functioning of the irrigation system **100.**

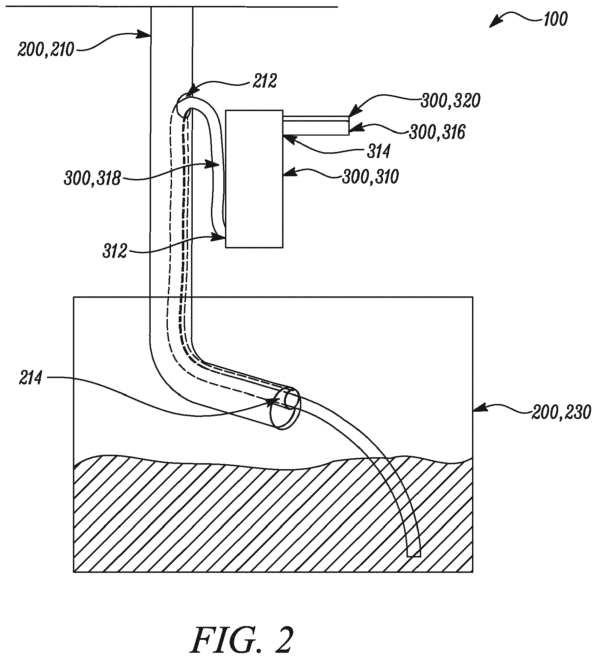

**FIG. 2** illustrates a schematic view of the irrigation system **100** such that the pump **310** is housed outside the water reservoir **230.** The pump **310** is located in the vicinity of the water reservoir **230.** The pump **310** is the electric water pump. The pump **310** draws electrical energy or electrical power via the power line **320** from the power source (not shown). Further, the pump **310** draws water to be pumped from the water reservoir **230** via the suction hose **318** fluidly coupled to the inlet of the **312** of the pump **310.** The suction hose **318** extends through the inlet **312** of the pump **310** and at least partially runs inside the downpipe **210** and extends into the water reservoir **230.** In other words, the pump **310** receives water from the water reservoir **230** via the suction hose **318** which at least partially houses in the downpipe **210** or passes through the downpipe **210.** Further, the water received by the pump **310** may be pumped out of the pump **310** via the pressure hose **316** that may further fluidly coupled with any known water distribution accessory. The pressure hose **316** as shown in **FIG. 2** does not passes through the downpipe **210** when the pump **310** is housed outside the water reservoir **230.**

Further, the suction hose **318** extending through the inlet **312** of the pump **310** at least partially runs inside the downpipe **210** and extend into the water reservoir **230** through the opening **212.**

Further, in another embodiment, the opening **212** may be covered with the cover having guiding, and insertion passages for the suction hose **318.** The cover may have slots, or orifices which may guide the suction hose **318** into the downpipe **210** in a sophisticated manner without any entanglement.

With continuous reference to **FIG. 2****,** the downpipe **210** includes the holder **214** to guide and hold the suction hose **318.** The holder **214** illustrated in **FIG. 2** is located proximate to the lower end of the downpipe **210.** The lower end of the downpipe **210** is defined as the end of the downpipe **210** which is proximate to the water collected in the water reservoir **230.** Further, the holder **214** of **FIG. 2** is configured to hold the suction hose **318** for proper alignment and hold of the pressure hose, and the suction hose **318** inside of the downpipe **210** for proper functioning of the irrigation system **100.**

Thus, the irrigation system **100** includes the pressure hose **316** and the suction hose **318** such that either the pressure hose **316** extending from the outlet **314** of the pump **310** or the suction hose **318** extending through the inlet **312** of the pump **310** at least partially runs inside the downpipe **210** and extends into the water reservoir **230** when the pump **310** is housed inside the water reservoir **230** and when the pump **310** is housed outside the water reservoir **230** respectively.

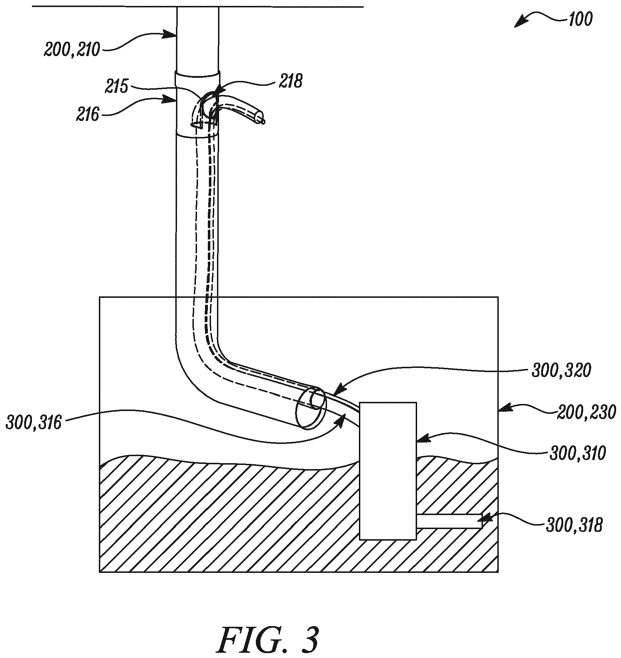

**FIG. 3** illustrates a schematic view of the irrigation system **100** with the downpipe **210** additionally having an insert **216.** The insert **216** is functionally disposed along the downpipe **210** within an empty space along the downpipe **210.** The empty space is created by removing a portion of the downpipe **210.** In other words, the portion of the downpipe **210** is removed in order to accommodate the insert **216** between the two portions of the downpipe **210** thus formed. The insert **216** has shape similar to the downpipe **210** and has dimensions marginally less than the downpipe **210** at the lower part of the insert **216** and dimensions marginally greater than the downpipe **210** at the upper part of the insert **216** for friction fitting with the downpipe **210.** The insert **216** as illustrated in **FIG. 3** allows the passage of the power line **320** and the pressure hose **316** when the pump **310** is housed inside the water reservoir **230.** The insert **216** allows the passage of the power line **320** and the pressure hose **316** through an insert opening **218.** In other words, the downpipe **210** has the insert **216** that includes the opening referred to as the insert opening **218** that allows the pressure hose **316** and the power line **320** to at least partially run inside the downpipe **210** and extend into the water reservoir **230.** Further, the insert opening **218** is circular in shape.

Further, the insert **216** includes a shielding component **215** integrated with the insert **216** and designed around the insert opening **218.** The shielding component **215** is configured to at least partially cover the insert opening **218.** The shielding component **215** starts from an upper peripheral portion of the insert opening **218** and couples with the insert opening **218** at the upper peripheral portion of the insert opening **218.** The shielding component **215** extends below a lower peripheral portion of the insert opening **218.** The lower peripheral portion of the insert opening **218** is relative closer to the water reservoir **230** than the upper peripheral portion. The shielding component **215** guides and channelizes the pressure hose **316** and the power line **320** towards the water reservoir **230** via the insert **216** and the downpipe **210.** Further, the shielding component **215** has a partial dome shape such that the rainwater passing through the insert **216** is guided or angled away from the insert opening **218.**

Further, in another embodiment, the insert opening **218** may be covered with a cover having guiding, and insertion passages for the power line **320,** and/ or the pressure hose **316.** The cover may have slots, or orifices which may guide the power line **320,** and/or the pressure hose **316** individually into the downpipe **210** in a sophisticated manner without any mutual entanglement.

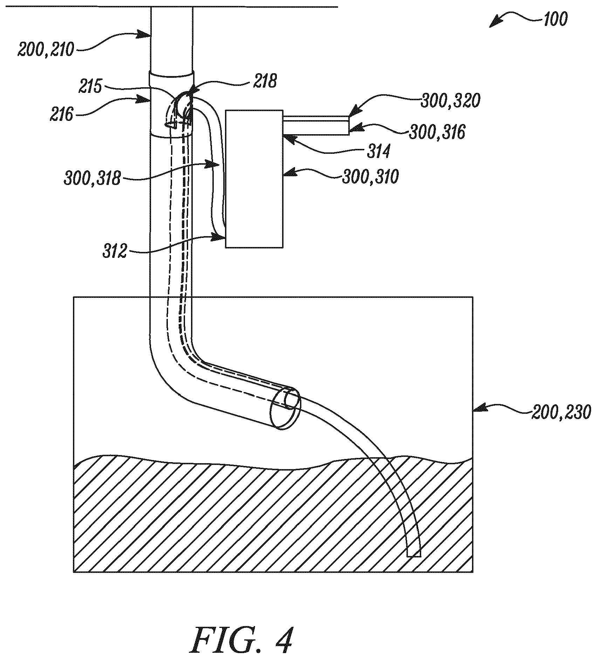

**FIG. 4** illustrates another schematic view of the irrigation system **100** with the downpipe **210** additionally having the insert **216.** The insert **216** as illustrated in **FIG. 4** allows the passage of the suction hose **318** when the pump **310** is housed outside the water reservoir **230.** The insert **216** allows the passage of the suction hose **318** through the insert opening **218.** In other words, the downpipe **210** has the insert **216** that includes the opening referred to as the insert opening **218** that allows the suction hose **318** to at least partially run inside the downpipe **210** and extend into the water reservoir **230.** The insert **216** further includes the shielding component **215,** which guides and channelizes the suction hose **318** towards the water reservoir **230** via the insert **216** and the downpipe **210.** Further, the shielding component **215** is configured to at least partially cover the insert opening **218.**

Further, in another embodiment, the insert opening **218** may be covered with the cover having guiding, and insertion passages for the suction hose **318.** The cover may have slots, or orifices which may guide the suction hose **318** into the downpipe **210** in a sophisticated manner without any entanglement.

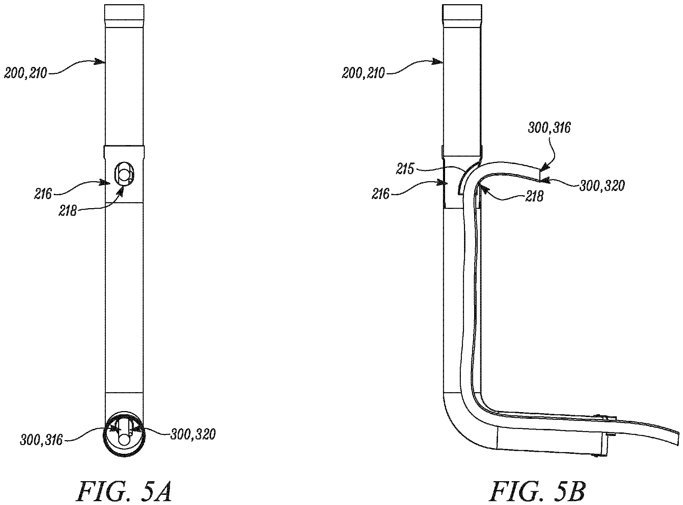

**FIG. 5A** illustrates a front schematic view of the downpipe **210** with the insert **216.** The insert includes the insert opening **218** through which the pressure hose **316** extending from the outlet **314** of the pump **310** and the power line **320** extending from the power source to deliver power to the pump **310** at least partially runs inside the downpipe **210** and extend into the water reservoir **230,** or through which the suction hose **318** extending through the inlet **312** of the pump **310** at least partially runs inside the downpipe **210** and extends into the water reservoir **230.** **FIG. 5A** illustrates the downpipe of the embodiment when the pump **310** is housed inside the water reservoir **230.**

**FIG. 5B** illustrates a side cross-sectional view of the downpipe **210** with the insert **216** when the pump **310** is housed inside the water reservoir **230.** The insert **216** includes the insert opening **218** through which the pressure hose **316** extending from the outlet **314** of the pump **310** and the power line **320** extending from the power source to deliver power to the pump **310** at least partially runs inside the downpipe **210** and extend into the water reservoir **230.** The pressure hose **316** and the power line **320** entering the insert **216** passes through the shielding component **215,** which guides and channelizes the pressure hose **316** and the power line **320** towards the water reservoir **230** via the insert **216** and the downpipe **210.**

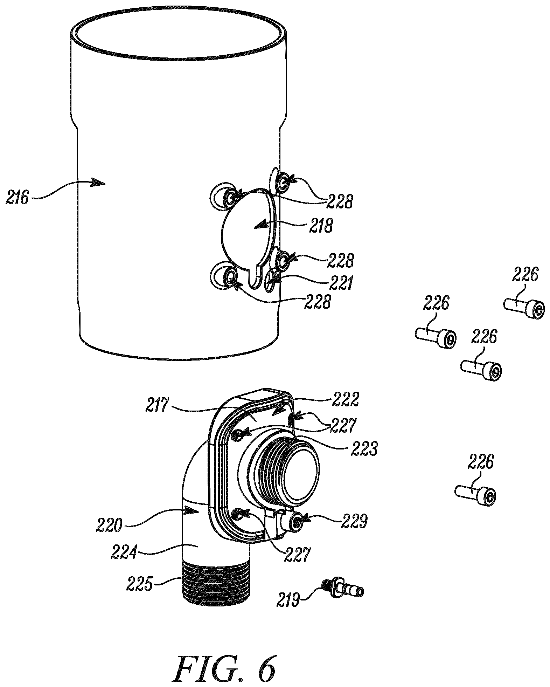

**FIG. 6** illustrates an exploded schematic view of the insert **216** according to another embodiment of the present invention. The insert **216** according to the embodiment additionally includes an adapter **220.** The insert **216** is removably coupled to the adapter **220.** The adapter **220** is configured to at least partially cover the insert opening **218** of the insert **216.** The adapter **220** includes a coupling portion **222** and an elbow portion **224.** The coupling portion **222** of the adapter **220** includes a flange portion **217** and a protruded threaded part **223.** The flange portion **217** is configured to allow removable coupling between the insert **216** and the adapter **220.** Further, the elbow portion **224** of the adapter **220** at one end is fixedly coupled with the coupling portion **222** and at other end includes a threaded part **225.** The protruded threaded part **223** of the coupling portion **222** remains outside the insert **216** or the insert opening **218** when the adapter **220** is removably coupled with the insert **216** whereas the flange portion **217** of the coupling portion **222** and the elbow portion **224** of the adapter **220** are hidden inside the insert **216** when the adapter **220** is removably coupled with the insert **216.**

Further, the insert **216** and the adapter **220** are removably coupled by use of fixation screws **226.** The fixation screws **226** pass through a plurality of protruded holes **228** formed on the wall of the insert **216** and a plurality of corresponding holes **227** formed in the flange portion **217** of the adapter **220.** Further, a slot **221** is formed on the wall of the insert **216** and a corresponding slot like entrance portion **229** is formed on the flange portion **217** for allowing insertion of a connector **219** to let the power line **320** extend into the downpipe **210** when the pump **310** is housed inside the water reservoir **230.**

With continuous reference to **FIG. 6****,** the elbow portion **224** is configured to connect or fluidly couple with the pressure hose **316** via the threaded part **225** when the pump **310** is housed inside the water reservoir **230.** Further, the coupling portion **222** is configured to receive pumped water from the pressure hose **316** via the elbow portion **224** of the adapter **220** and transfer the water for further applications via fluidly coupling with any water distribution accessory via the protruded threaded part **223.**

Similarly, when the pump **310** is housed outside the water reservoir **230,** the suction hose **318** of the pump **310** is threadedly engaged with the protruded threaded part **223** of the adapter **220** and a secondary suction hose (not shown) is threadedly engaged with the threaded part **225** and extend via downpipe into the water reservoir **230.**

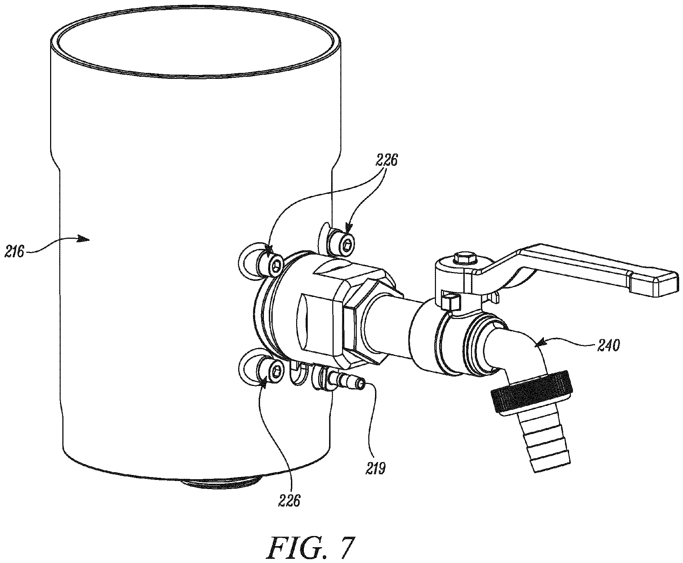

**FIG. 7** illustrates a schematic view of the insert **216** removably coupled with the adapter **220** using the fixation screws **226.** The protruded threaded part **223** of the adapter **220** is further removably coupled with a faucet **240** as the water distribution accessory to distribute the water pumped by the pump **310** when the pump **310** is housed inside the water reservoir **230.** The faucet **240** is selectively operated as per the requirement of the water for applications, such as irrigation.

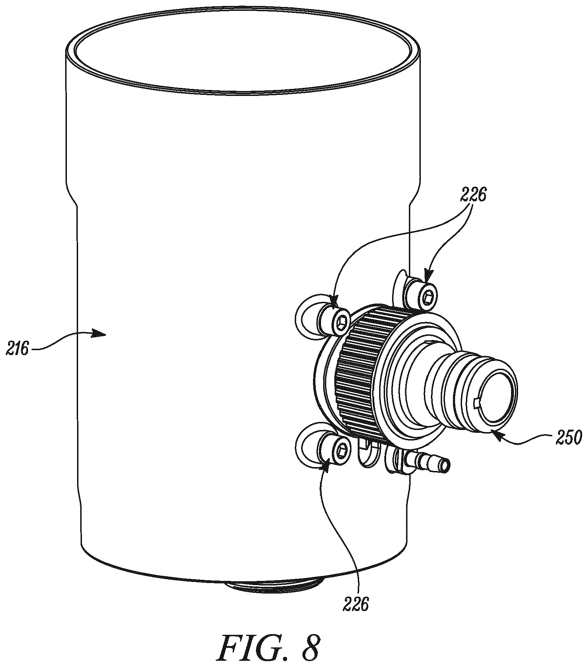

**FIG. 8** illustrates another schematic view of the insert **216** removably coupled with the adapter **220** using the fixation screws **226.** The protruded threaded part **223** of the adapter **220** is further removably coupled with a hose connector **250** as the water distribution accessory to distribute the water pumped by the pump **310** when the pump **310** is housed inside the water reservoir **230.** The hose connector **250** is further connected with a distribution hose, and the like for water distribution for carrying various applications.

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Irrigation System
- **200**: Rainwater Collection System
- **210**: Downpipe
- **212**: Opening
- **214**: Holder
- **215**: Shielding component
- **216**: Insert
- **217**: Flange Portion
- **218**: Insert Opening
- **219**: Connector
- **220**: Adapter
- **221**: Slot
- **222**: Coupling Portion
- **223**: Protruded Threaded Part
- **224**: Elbow Portion
- **225**: Threaded Part
- **226**: Fixation Screws
- **227**: Holes
- **228**: Protruded Holes
- **229**: Entrance Portion
- **230**: Water Reservoir
- **240**: Faucet
- **250**: Hose Connector
- **300**: Rainwater Distribution System
- **310**: Pump
- **312**: Inlet
- **314**: Outlet
- **316**: Pressure Hose
- **318**: Suction Hose
- **320**: Power line
- **X-X'**: Axis

## Claims

1. An irrigation system **(100),** comprising:
a rainwater collection system **(200),** wherein the rainwater collection system **(200)** comprising:
a downpipe **(210);** and
a water reservoir **(230)** fluidly coupled to the downpipe **(210)** for receiving rainwater therefrom;
and
a rainwater distribution system **(300),** wherein the rainwater distribution system **(300)** comprising:
a pump **(310)** having an inlet **(312)** and an outlet **(314)** to supply water received from the water reservoir **(230);**
a power line **(320)** extending from a power source to deliver power to the pump **(310);** and
a pressure hose **(316)** fluidly coupled to the pump **(310)** for supplying the pumped water;
**characterized in that:**
either the pressure hose **(316)** extending from the outlet **(314)** of the pump **(310)** or a suction hose **(318)** extending through the inlet **(312)** of the pump **(310)** at least partially runs inside the downpipe **(210)** and extends into the water reservoir **(230).**

2. The irrigation system **(100)** according to claim **1,** wherein the pump **(310)** is an electric water pump.

3. The irrigation system **(100)** according to any one of the preceding claims, wherein the pump **(310)** is a submersible pump.

4. The irrigation system **(100)** according to any one of the preceding claims, wherein the pump **(310)** is housed inside the water reservoir **(230)** such that the pressure hose **(316)** extending from the outlet **(314)** of the pump **(310)** and the power line **(320)** extending from the power source to deliver power to the pump **(310)** at least partially runs inside the downpipe **(210)** and extend into the water reservoir **(230).**

5. The irrigation system **(100)** according to any one of the preceding claims, wherein the pump **(310)** is housed outside the water reservoir **(230)** such that the suction hose **(318)** extending through the inlet **(312)** of the pump **(310)** at least partially runs inside the downpipe **(210)** and extends into the water reservoir **(230).**

6. The irrigation system **(100)** according to any one of the preceding claims, wherein the downpipe **(210)** includes an opening **(212).**

7. The irrigation system **(100)** according to claim **6,** wherein the pressure hose **(316)** extending from the outlet **(314)** of the pump **(310)** or the suction hose **(318)** extending through the inlet **(312)** of the pump **(310)** at least partially runs inside the downpipe **(210)** and extend into the water reservoir **(230)** through the opening **(212).**

8. The irrigation system **(100)** according to claim **6,** wherein the power line **(320)** extending from the power source to deliver power to the pump **(310)** at least partially runs inside the downpipe **(210)** and extend into the water reservoir **(230)** through the opening **(212).**

9. The irrigation system according to any of the claims **6, 7,** or **8,** wherein the opening is covered with a cover having guiding, and insertion passages for the power line, and/or the suction hose, and/or the pressure hose.

10. The irrigation system **(100)** according to any one of the preceding claims, wherein the downpipe **(210)** includes a holder **(214)** to guide and hold the pressure hose **(316),** and/ or the suction hose **(318),** and/ or the power line **(320).**

11. An insert **(216)** for the irrigation system **(100)** according to any of the claims 1-10, wherein the insert **(216)** is functionally disposed along the downpipe **(210)** within an empty space along the downpipe **(210),** wherein the empty space is created by removing a portion of the downpipe **(210).**

12. The insert **(216)** according to claim 11, wherein the insert **(216)** includes an insert opening **(218).**

13. The insert **(216)** according to any of the claims 11 or 12, wherein the insert **(216)** includes a shielding component **(215),** wherein the shielding component **(215)** is configured to at least partially cover the insert opening **(218).**

14. The insert **(216)** according to any of the claims 11 or 12, wherein the insert **(216)** is removably coupled to an adapter **(220).**

15. The insert **(216)** according to claim 14, wherein the adapter **(220)** includes a flange portion **(217)** and an elbow portion **(224),** wherein the flange portion **(217)** is configured to allow removal coupling between the insert **(216)** and the adapter **(220),** and the elbow portion **(224)** is configured to fluidly couple with the pressure hose **(316)** when the pump **(310)** is housed inside the water reservoir **(230),** and wherein the adapter **(220)** is configured to at least partially cover the insert opening **(218).**
